# EUROPÄISCHE PATENTSCHRIFT

(11) **EP 2 379 879 B1**
(45) Veröffentlichungstag und Bekanntmachung des Hinweises auf die Patenterteilung: **15.05.2013**
(21) Anmeldenummer: 09771294.7
(22) Anmeldetag: 20.11.2009
(51) Int. Cl.: F03D 9/00, F03D 9/02

(54) **GENERATORANORDNUNG FÜR EINE WINDENERGIEANLAGE**
GENERATOR ARRANGEMENT FOR A WIND POWER PLANT
ENSEMBLE GÉNÉRATRICE POUR ÉOLIENNE

(30) Priorität: 19.12.2008 DE 102008063875
(43) Veröffentlichungstag der Anmeldung: 26.10.2011
(73) Patentinhaber: Robert Bosch GmbH, 70469 Stuttgart (DE)
(72) Erfinder: PAWELETZ, Anton, 70736 Fellbach (DE); TENBERGE, Heinz-Josef, 45549 Sprockhövel (DE)
(74) Vertreter: Thürer, Andreas
(86) Internationale Anmeldenummer: PCT/EP2009/008271
(87) Internationale Veröffentlichungsnummer: WO 2010/069449

(56) Entgegenhaltungen:
- EP-A1- 1 677 005
- DE-B3- 10 318 945

## Beschreibung

Die vorliegende Erfindung betrifft eine Generatoranordnung für eine Windenergieanlage.

### Stand der Technik

Ein großer Teil der bekannten Windenergieanlagen ist mit schnell drehenden Generatoren ausgestattet, wobei zur Übersetzung der relativ langsamen Umdrehungszahl des Windrades auf die Generatorumdrehungszahl ein- oder mehrstufige Getriebe eingesetzt werden. Es sind Lösungen bekannt, bei denen Getriebe und Generator hintereinander als separate Baugruppen auf einem Maschinenträger angeordnet sind. Dies ermöglicht im Schadensfall ein einfaches Austauschen der Komponenten, die Gesamtanordnung ist jedoch relativ groß und schwer, was zu Problemen im Hinblick auf den Transport in die Gondel der Windenergieanlage und die Anordnung darin hervorruft.

Weiterhin sind Anordnungen bekannt, bei denen eine Getriebeanordnung zumindest teilweise innerhalb des Generators angeordnet ist, was zu einer Platzersparnis führt. Beispielhafte Lösungen sind in der DE 102 42 703 B3 oder der DE 10 2004 005 543 A1 offenbart. Nachteilig an diesen Lösungen ist jedoch die aufwändige gegenseitige Lagerung der einzelnen Getriebe- und Generatorelemente. Dabei sind für jeden Getriebefreiheitsgrad, d.h. die Anzahl der möglichen unabhängigen Bewegungen, üblicherweise zwei Lager vorgesehen. Beispielsweise sind in der genannten DE 102 42 707 B3 das Sonnenrad sowie das Hohlrad je zweifach an dem Planetenträger gelagert, so dass die Getriebeanordnung insgesamt vier Lager umfasst.

Ausgehend von dem genannten Stand der Technik stellt sich somit die Aufgabe, eine Generatoranordnung mit zumindest teilweise integriertem Getriebe für eine Windenergieanlage anzugeben, die kompakt ausgebildet ist und mit möglichst wenig Lagern auskommt.

Diese Aufgabe wird gelöst durch eine Generatoranordnung für eine Windenergieanlage mit den Merkmalen des Patentanspruchs 1. Vorteilhafte Ausgestaltungen sind Gegenstand der Unteransprüche sowie der nachfolgenden Beschreibung.

Eine erfindungsgemäße Generatoranordnung für eine Windenergieanlage weist ein ringförmiges Primärteil, ein ringförmiges Sekundärteil sowie eine Planetengetriebeanordnung, die innerhalb des Primärteils und des Sekundärteils angeordnet ist, auf. Die Planetengetriebeanordnung umfasst ein Hohlrad, ein Sonnenrad und wenigstens zwei Planetenräder, wobei das Sonnenrad im Wesentlichen ringschalenförmig mit einer Innenwand, einer Außenwand und einem die Innenwand und die Außenwand verbindenden Steg ausgebildet ist. Das Hohlrad ist zwischen der Innenwand und der Außenwand des Sonnenrads angeordnet und an der Außenwand des Sonnenrads gelagert.

### Vorteile der Erfindung

Die erfindungsgemäße Lehre betrifft insbesondere die Anordnung des Hohlrads innerhalb der Ringschale des Sonnerads, so dass zwischen dem Hohlrad und dem Sonnenrad ein Lager vorgesehen werden kann. Dadurch kann auf aufwändige, ggf. zweifache Lagerung des Sonnenrades gegenüber den Planetenrädern oder dem Planetenträger, wie es im Stand der Technik üblich ist, verzichtet werden. Auf diese Weise kann die Anzahl der notwendigen Lager verringert werden, was die Montage vereinfacht und zu einer Kosten- und Gewichtsreduzierung führt. Vorteilhafterweise ist das Hohlrad an einem Planetenträger gelagert. In dieser vorteilhaften Ausgestaltung sind insgesamt nur zwei Lager, d.h. das Lager zwischen Hohlrad und Sonnenrad und das Lager zwischen Hohlrad und Planetenträger, für die Getriebeanordnung nötig. Beispielsweise können damit im Vergleich zu dem in der Beschreibungseinleitung näher erläuterten Stand der Technik zwei Lager eingespart werden. Somit ist eine Getriebeanordnung bereitstellbar, bei der weniger Lager nötig sind, als Freiheitsgrade vorhanden sind, da sich die Getriebeelemente teilweise gegenseitig abstützen.

Zweckmäßigerweise rollen die wenigstens zwei Planetenräder zwischen dem Hohlrad und der Innenwand des Sonnenrads ab. Auf diese Weise ist eine kompakte Bauweise bereitstellbar, bei der die Größe des Sonnenrads, d.h. der von der Außenwand definierte Durchmesser, unabhängig von der Anordnung der Planetenräder ist.

In Ausgestaltung ist das ringförmige Sekundärteil an der Außenwand des Sonnenrads angeordnet. Somit kann ein direkter Kraft- bzw. Momentschluss vom Getriebe an das Sekundärteil bzw. den Rotor des Generators bereitgestellt werden. Je nach Ausgestaltung des Generators, z.B. synchron oder asynchron, permanent erregt oder elektrisch erregt, usw. kann das Sonnenrad zur Leitung des magnetischen Flusses und/oder von elektrischem Strom verwendet werden, oder eine Führung von magnetischem Fluss und/oder elektrischem Strom durch das Sonnenrad wird vermieden. Somit kann, soweit notwendig, auf zusätzliche magnetisch und/oder elektrisch leitfähige Elemente verzichtet werden. Alternativ oder zusätzlich kann die Gestalt des Sonnenrades an eine erwünschte Flussführung angepasst werden. Durch den möglichen Verzicht auf zusätzliche Elemente kann insbesondere eine weitere Gewichtsersparnis erzielt werden.

Gemäß einer besonders bevorzugten Ausgestaltung ist das Hohlrad im Wesentlichen ringschalenförmig mit einer Innenwand, einer Außenwand und einem die Innenwand und die Außenwand verbindenden Steg ausgebildet, wobei das ringförmige Primärteil und das ringförmige Sekundärteil zwischen der Innenwand und der Außenwand des Hohlrads angeordnet sind. Dadurch kann auf ein separates Gehäuse verzichtet werden, was zu einer signifikanten Platz- und Gewichtsersparnis führt. Mit anderen Worten wird das Gehäuse vom Hohlrad selbst bereitgestellt. Bei Verwendung eines ringschalenförmigen Hohlrads ist zweckmäßigerweise die Innenwand des Hohlrads an dem Planetenträger gelagert und/oder die wenigstens zwei Planetenräder rollen zwischen der Innenwand des Hohlrads und der Innenwand des Sonnenrads ab. Damit kann eine weitere Platzersparnis herbeigeführt werden, da die Größe des Getriebes im Wesentlichen durch den Durchmesser der Innenwand des Hohlrads definiert wird.

Vorteilhafterweise ist das ringförmige Primärteil an der Außenwand des Hohlrads angeordnet. In der Folge kann auf separate Trägerelemente verzichtet werden, da das Primärteil direkt am Hohlrad angeordnet ist und auf ein Gehäuse verzichtet werden kann.

In Ausgestaltung ist der Planetengetriebeanordnung eine zweite Getriebeanordnung, insbesondere ein zweistufiges Getriebe, vorgeschaltet. Insgesamt ist somit eine hohe und für bestimmte Generatoren notwendige Übersetzung bereitstellbar, wobei weniger Platz und Gewicht als bei bekannten dreistufigen Getrieben mit nachgeschaltetem Generator notwendig ist.

Zweckmäßigerweise sind die zweite Getriebeanordnung und das Hohlrad mittels wenigstens eines elastischen Elements verbunden. Auf diese Weise kann zum einen sichergestellt werden, dass die zweite Getriebeanordnung und die Planetengetriebeanordnung unabhängig voneinander bereitstellbar sind und erst am Einsatzort miteinander verbunden werden müssen. Die elastischen Elemente dienen zum anderen dazu, Drehmomentstöße abzufedern.

Es bietet sich an, dass der Planetenträger in ein Antriebsteil und ein Abtriebsteil teilbar ist, wobei das Antriebsteil an der zweiten Getriebeanordnung und das Abtriebsteil an der Planetengetriebeanordnung angeordnet ist. Auf diese Weise kann auch eine einfache spätere Trennung der Planetengetriebeanordnung von der zweiten Getriebeanordnung gewährleistet werden. Das Antriebsteil und das Abtriebsteil sind dazu lösbar miteinander verbunden.

Gemäß einer besonders bevorzugten Ausführungsform ist der Generator als doppelt gespeister Asynchrongenerator ausgebildet. Derartige Generatoren eignen sich besonders für Windenergieanlagen, da sie robust und zuverlässig sind und nicht unter einer Entmagnetisierung von Permanentmagnetanteilen leiden. In dieser Ausgestaltung ist das Sonnenrad mit Schleifringen ausgestattet, um eine Stromzufuhr für das Sekundärteil bereitstellen zu können. Das Sonnenrad kann insbesondere zur Kabelführung teilweise hohl ausgebildet sein.

Gemäß einer ebenso bevorzugten Ausführungsform ist der Generator als permanent erregter Synchrongenerator ausgebildet. Auch diese Art von Generatoren wird bei Windenergieanlagen häufig eingesetzt, da auf Schleifringe, Bürsten usw. zur Kontaktierung des Sekundärteils verzichtet werden kann.

Mit der Erfindung kann eine Generatoranordnung mit einem leichten und kompakten Getriebe bereitgestellt werden, das insbesondere aufgrund der geringen Ausmaße sowie des geringen Gewichts mit wenigen Lagerelementen auskommt. Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt eine erste bevorzugte Ausgestaltung einer erfindungsgemäßen Generatoranordnung umfassend einen permanent erregten Synchrongenerator und
- Figur 2: zeigt eine zweite bevorzugte Ausgestaltung einer erfindungsgemäßen Generatoranordnung umfassend einen doppelt gespeisten Asynchrongenerator.

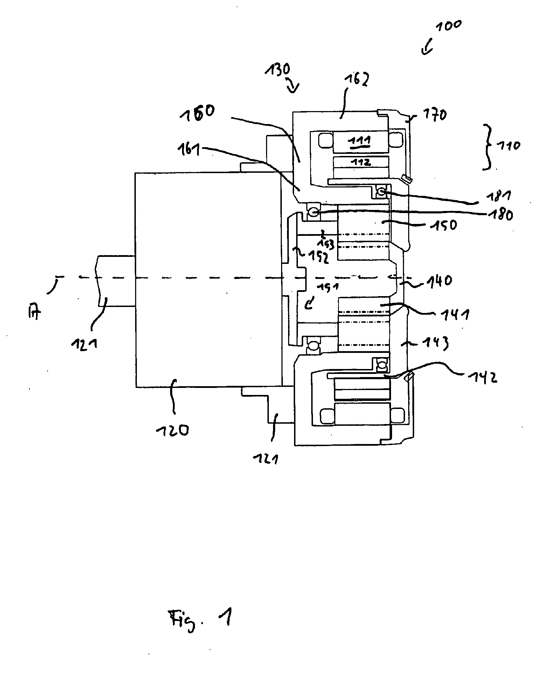

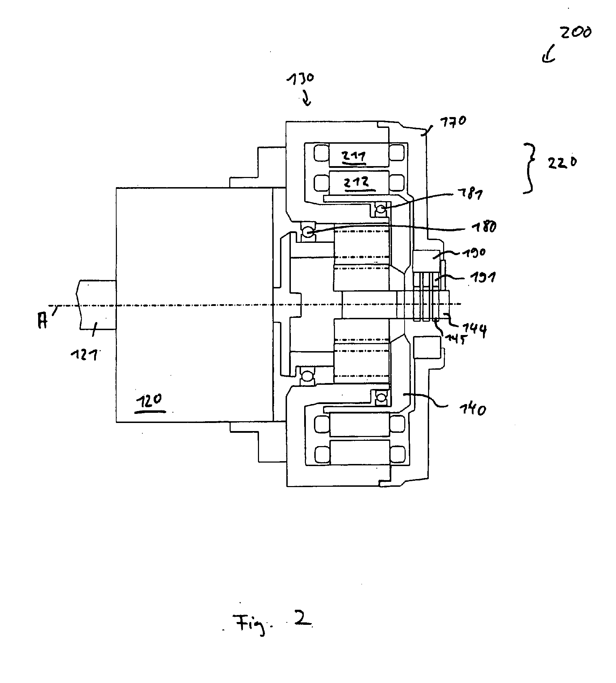

In den Figuren 1 und 2 sind unterschiedliche Ausgestaltungen einer erfindungsgemäßen Generatoranordnung abgebildet, die nachfolgend jedoch insoweit übergreifend beschrieben werden, als sie gleiche oder gleich wirkende Elemente enthalten. Diese sind mit gleichen Bezugszeichen versehen.

In Figur 1 ist eine erste bevorzugte Ausgestaltung einer erfindungsgemäßen Generatoranordnung schematisch im Querschnitt dargestellt und insgesamt mit 100 bezeichnet. Die Generatoranordnung 100 umfasst einen permanent erregten Synchrongenerator 110. Der Generator 110 weist ein eine Spulenanordnung umfassendes Primärteil bzw. einen Stator 111 sowie ein eine Permanentmagnetanordnung umfassendes Sekundärteil bzw. einen Rotor 112 auf. Der Stator 111 ist mit einem Wickelkopf ausgerüstet. Der Rotor ist um eine Rotationsachse A drehbar gelagert.

Die Generatoranordnung 100 weist in der gezeigten Darstellung ein zweistufiges Vorschaltgetriebe 120 auf, das mit einer Antriebswelle 121, die beispielsweise vom Windrad kommt, verbunden ist. Die Generatoranordnung 100 weist weiterhin ein Planetengetriebe 130 auf, das im wesentlichen innerhalb des Rotors 112 angeordnet ist. Das Vorschaltgetriebe 120 sowie das Planetengetriebe 130 sind mittels elastischer Elemente 121 verbunden.

Das Planetengetriebe 130 weist ein Sonnenrad 140, Planetenräder 150 sowie ein innen verzahntes Hohlrad 160 auf. Die Planetenräder 150 sind an einem Planetenradträger 151 angeordnet, der vom Vorschaltgetriebe 120 angetrieben wird. Das Hohlrad 160 ist drehfest angeordnet und dient zugleich als Gehäuse für das Planetengetriebe 130 und den Generator 110. Das von dem Hohlrad 160 gebildete Gehäuse ist mit einer Abdeckung 170 versehen.

Der Planetenträger 151 weist ein Antriebsteil 152, das mit dem Vorschaltgetriebe 120 in Verbindung steht, und ein Abtriebsteil 153, das mit dem Planetengetriebe in Verbindung steht, auf. Das Antriebsteil 152 und das Abtriebsteil 153 des Planetenträgers 151 sind lösbar miteinander verbunden. Auf diese Weise kann das Vorschaltgetriebe 120 leicht vom Planetengetriebe 130 getrennt werden.

Das Sonnenrad 140 weist eine Innenwand 141 und eine Außenwand 142 auf, die durch einen Steg 143 verbunden sind. Das Sonnenrad ist somit im wesentlichen ringschalenförmig ausgebildet. Das Hohlrad 160 weist ebenso eine Innenwand 161, eine Außenwand 162 sowie einen die Innenwand und die Außenwand verbindenden Steg 163 auf. Somit ist auch das Hohlrad 160 im wesentlichen ringschalenförmig ausgebildet.

Die Planetenräder 150 rollen zwischen der Innenwand 141 des Sonnenrads und der Innenwand 161 des Hohlrads ab. Der Rotor 112 ist an der Außenwand 142 des Sonnenrads 140 angebracht. Der Stator 111 ist an der Außenwand 162 des Hohlrads 160 angebracht.

Das Hohlrad 160, genauer die Innenwand 161 des Hohlrads 160, ist gegenüber dem Planetenträger 151 an einem Lager 180 gelagert. Das Hohlrad 160, genauer die Innenwand 161 des Hohlrads 160, ist weiterhin gegenüber der Außenwand 142 des Sonnenrads 140 an einem Lager 181 gelagert. Im Übrigen stützen sich die Innenwand 161 des Hohlrads 160, die Planetenräder 150 und die Innenwand 141 des Sonnenrads 140 gegenseitig ab.

In Figur 2 ist eine zweite bevorzugte Ausgestaltung einer erfindungsgemäßen Getriebeanordnung schematisch im Querschnitt dargestellt und insgesamt mit 200 bezeichnet. Im Gegensatz zur Generatoranordnung 100 aus Figur 1 ist die Generatoranordnung 200 mit einem doppelt gespeisten Asynchrongenerator 220 ausgestattet. Der Generator 220 weist ein Primärteil bzw. einen Stator 211 sowie ein Sekundärteil bzw. einem Rotor 212 auf, die jeweils mit Wickelköpfen versehen sind. Der Stator 211 ist wiederum an der Außenwand 162 des Hohlrads 160 befestigt. Ebenso ist der Rotor 212 wiederum an der Außenwand 142 des Sonnenrads 140 befestigt.

Da der Generator 220 als Asynchrongenerator ausgestaltet ist, ist eine Stromzuführung zum Rotor 212 erforderlich. Aus diesem Grund weist das Sonnenrad 140 eine Nabe 144 auf, die mit Schleifringen 145 versehen ist. Die Schleifringe 145 werden von Bürsten 191 eines Stromabnehmers 190 beaufschlagt.

Durch die bevorzugte Ausgestaltung der Erfindung kann somit ein kompaktes Planetengetriebe innerhalb eines Generators 110 bzw. 210 bereitgestellt werden, das über drei Getriebefreiheitsgrade verfügt, aber nur zwei Lager 180 und 181 zur Lagerung der Getrieberäder 140, 150, 151 und 160 benötigt. Somit können Reibungsverluste, Lagerungenauigkeiten, Wirkungsgradverluste usw. vermindert werden. Weiterhin ist der Getriebewartungsaufwand deutlich verringert.

Es versteht sich, dass in den dargestellten Figuren nur beispielhafte Ausführungsformen der Erfindung dargestellt sind. Daneben ist jede andere Ausführungsform denkbar, ohne den Rahmen dieser Erfindung zu verlassen.

## Patentansprüche

1. Generatoranordnung für eine Windenergieanlage mit
einem ringförmigen Primärteil (111; 211),
einem ringförmigen Sekundärteil (112; 212) sowie
einer Planetengetriebeanordnung (130), die innerhalb des Primärteils (111; 211) und des Sekundärteils (112; 212) angeordnet ist, wobei die Planetengetriebeanordnung (130) ein Hohlrad (160), ein Sonnenrad (140) und wenigstens zwei Planetenräder (150) aufweist,
wobei das Sonnenrad (140) im wesentlichen ringschalenförmig mit einer Innenwand (141), einer Außenwand (142) und einem die Innenwand und die Außenwand verbindenden Steg (143) ausgebildet ist,
wobei das Hohlrad (160) zwischen der Innenwand (141) und der Außenwand (142) des Sonnenrads (140) angeordnet und an der Außenwand (142) des Sonnenrads (140) gelagert ist.

2. Generatoranordnung nach Anspruch 1, wobei das Hohlrad (160) an einem Planetenträger (151) gelagert ist.

3. Generatoranordnung nach den Ansprüchen 1 oder 2, wobei die wenigstens zwei Planetenräder (150) zwischen dem Hohlrad (160) und der Innenwand (141) des Sonnenrads abrollen.

4. Generatoranordnung nach einem der vorstehenden Ansprüche, wobei das ringförmige Sekundärteil (112; 212) an der Außenwand (142) des Sonnenrads (140) angeordnet ist.

5. Generatoranordnung nach einem der vorstehenden Ansprüche, wobei das Hohlrad (160) im wesentlichen ringschalenförmig mit einer Innenwand (161), einer Außenwand (162) und einem die Innenwand und die Außenwand verbindenden Steg (163) ausgebildet ist, wobei das ringförmige Primärteil (111; 211) und das ringförmige Sekundärteil (112; 212) zwischen der Innenwand (161) und der Außenwand (162) des Hohlrads (160) angeordnet sind.

6. Generatoranordnung nach Anspruch 5, wobei das ringförmige Primärteil (111; 211) an der Außenwand (162) des Hohlrads (160) angeordnet ist.

7. Generatoranordnung nach einem der vorstehenden Ansprüche, wobei der Planetengetriebeanordnung (130) eine zweite Getriebeanordnung (120), insbesondere ein zweistufiges Getriebe, vorgeschaltet ist.

8. Generatoranordnung nach Anspruch 7, wobei die zweite Getriebeanordnung (120) und das Hohlrad (160) mittels wenigstens eines elastischen Elements (121) verbunden sind.

9. Generatoranordnung nach Anspruch 7 oder 8, wobei der Planetenträger (151) in ein Antriebsteil (152) und ein Abtriebsteil (152) teilbar ist, wobei das Antriebsteil (152) an der zweiten Getriebeanordnung (120) und das Abtriebsteil (153) an der Planetengetriebeanordnung (130) angeordnet ist.

10. Generatoranordnung nach einem der vorstehenden Ansprüche, wobei der Generator als doppelt gespeister Asynchrongenerator (210) ausgebildet ist.

11. Generatoranordnung nach einem der Ansprüche 1 bis 9, wobei der Generator als permanent erregter Synchrongenerator (110) ausgebildet ist.

12. Windenergieanlage mit einer Generatoranordnung (100; 200) nach einem der vorstehenden Ansprüche.

## Claims

1. Generator arrangement for a wind energy plant having an annular primary part (111; 211), an annular secondary part (112; 212) and a planetary gear arrangement (130) which is arranged inside the primary part (111; 211) and the secondary part (112; 212), the planetary gear arrangement (130) having an internal gear (160), a sun gear (140) and at least two planetary gears (150), the sun gear (140) being configured substantially in the shape of an annular shell with an inner wall (141), an outer wall (142) and a web (143) which connects the inner wall and the outer wall, the internal gear (160) being arranged between the inner wall (141) and the outer wall (142) of the sun gear (140) and being mounted on the outer wall (142) of the sun gear (140).

2. Generator arrangement according to Claim 1, the internal gear (160) being mounted on a planetary carrier (151).

3. Generator arrangement according to Claim 1 or 2, the at least two planetary gears (150) rolling between the internal gear (160) and the inner wall (141) of the sun gear.

4. Generator arrangement according to one of the preceding claims, the annular secondary part (112; 212) being arranged on the outer wall (142) of the sun gear (140).

5. Generator arrangement according to one of the preceding claims, the internal gear (160) being configured substantially in the shape of an annular shell with an inner wall (161), an outer wall (162) and a web (163) which connects the inner wall and the outer wall, the annular primary part (111; 211) and the annular secondary part (112; 212) being arranged between the inner wall (161) and the outer wall (162) of the internal gear (160).

6. Generator arrangement according to Claim 5, the annular primary part (111; 211) being arranged on the outer wall (162) of the internal gear (160).

7. Generator arrangement according to one of the preceding claims, a second gear arrangement (120), in particular a two-stage gear mechanism, being connected upstream of the planetary gear arrangement (130).

8. Generator arrangement according to Claim 7, the second gear arrangement (120) and the internal gear (160) being connected by means of at least one elastic element (121).

9. Generator arrangement according to Claim 7 or 8, it being possible for the planetary carrier (151) to be divided into a drive part (152) and an output part (152), the drive part (152) being arranged on the second gear arrangement (120) and the output part (153) being arranged on the planetary gear arrangement (130).

10. Generator arrangement according to one of the preceding claims, the generator being configured as a doubly fed asynchronous generator (210).

11. Generator arrangement according to one of Claims 1 to 9, the generator being configured as a permanently excited synchronous generator (110).

12. Wind energy plant having a generator arrangement (100; 200) according to one of the preceding claims.

## Revendications

1. Ensemble génératrice pour une éolienne avec :
une partie principale (111 ; 211) en forme d'anneau ;
une partie secondaire (112 ; 212) en forme d'anneau ; ainsi que :
un agencement de transmission planétaire (130) disposé à l'intérieur de la partie principale (111 ; 211) et de la partie secondaire (112 ; 212), l'agencement de transmission planétaire (130) comprenant une roue creuse (160), une roue solaire (140) et au moins deux roues planétaires (150) ;
la roue solaire (140) prenant pour l'essentiel une forme d'enveloppe annulaire dotée d'une paroi intérieure (141), d'une paroi extérieure (142) et d'un étai (143) reliant la paroi intérieure et la paroi extérieure ;
la roue creuse (160) étant disposée entre la paroi intérieure (141) et la paroi extérieure (142) de la roue solaire (140) et se plaçant au niveau de la paroi extérieure (142) de la roue solaire (140).

2. Ensemble génératrice selon la revendication 1, la roue creuse (160) étant disposée au niveau d'un support planétaire (151).

3. Ensemble génératrice selon les revendications 1 ou 2, les au moins deux roues planétaires (150) roulant entre la roue creuse (160) et la paroi intérieure (141) de la roue solaire.

4. Ensemble génératrice selon l'une quelconque des revendications précédentes, la partie secondaire (112 ; 212) en forme d'anneau étant disposée au niveau de la paroi extérieure (142) de la roue solaire (140).

5. Ensemble génératrice selon l'une quelconque des revendications précédentes, la roue creuse (160) prenant pour l'essentiel une forme d'enveloppe annulaire dotée d'une paroi intérieure (161), d'une paroi extérieure (162) et d'un étai (163) reliant la paroi intérieure et la paroi extérieure, la partie principale (111 ; 211) en forme d'anneau et la partie secondaire (112 ; 212) en forme d'anneau étant disposées entre la paroi intérieure (161) et la paroi extérieure (162) de la roue creuse (160).

6. Ensemble génératrice selon la revendication 5, la partie principale (111 ; 211) en forme d'anneau étant disposée au niveau de la paroi extérieure (162) de la roue creuse (160).

7. Ensemble génératrice selon l'une quelconque des revendications précédentes, un deuxième agencement de transmission (120), notamment une transmission à deux étages, étant connecté en amont de l'agencement de transmission planétaire (130).

8. Ensemble génératrice selon la revendication 7, le deuxième agencement de transmission (120) et la roue creuse (160) étant reliés au moyen d'au moins un élément élastique (121).

9. Ensemble génératrice selon les revendications 7 ou 8, le support planétaire (151) pouvant être divisé en une partie d'entraînement en entrée (152) et une partie d'entraînement en sortie (152), la partie d'entraînement en entrée (152) étant disposée au niveau du deuxième agencement de transmission (120) et la partie d'entraînement en sortie (153) étant disposée au niveau de l'agencement de transmission planétaire (130).

10. Ensemble génératrice selon l'une quelconque des revendications précédentes, la génératrice prenant la forme d'une génératrice asynchrone (210) à double alimentation.

11. Ensemble génératrice selon l'une quelconque des revendications 1 à 9, la génératrice prenant la forme d'une génératrice synchrone (110) à excitation permanente.

12. Éolienne dotée d'un ensemble génératrice (100 ; 200) selon l'une quelconque des revendications précédentes.
